# EUROPÄISCHE PATENTANMELDUNG

(11) **EP 4 585 329 A1**
(43) Veröffentlichungstag der Anmeldung: **16.07.2025**
(21) Anmeldenummer: 24151570.9
(22) Anmeldetag: 12.01.2024
(51) Int. Cl.: B22F 10/366, B22F 10/80, B22F 10/85, B22F 12/90, B29C 64/386, B33Y 50/00, B33Y 50/02, G05B 19/408, G05B 19/4099, B22F 10/28, B29C 64/153, B29C 64/393

(54) **VERFAHREN ZUM KOMPRIMIEREN VON ZUMINDEST EINER ARBEITSDATEI ZUR ERZEUGUNG EINES PRODUKTS FÜR EINE ADDITIVE FERTIGUNGSVORRICHTUNG, COMPUTERPROGRAMMPRODUKT, COMPUTERLESBARES SPEICHERMEDIUM SOWIE ELEKTRONISCHE RECHENEINRICHTUNG**

(71) Anmelder: Siemens Aktiengesellschaft, 80333 München (DE)
(72) Erfinder: Heinrichsdorff, Frank, 14513 Teltow (DE); Kastsian, Darya, 14612 Falkensee (DE); Reznik, Daniel, 13503 Berlin (DE); Theile, Oliver, 13437 Berlin (DE)
(74) Vertreter: Siemens Patent Attorneys

(57) **Zusammenfassung**

Die Erfindung betrifft ein Verfahren zum Komprimieren von zumindest einer Arbeitsdatei (16) zur Erzeugung eines Produkts (12) für eine additive Fertigungsvorrichtung (10) mittels einer elektronischen Recheneinrichtung (14), mit den Schritten: Bereitstellen der Arbeitsdatei (16) mit zumindest zwei vorgegebenen Belichtungsvektoren (18, 20, 22, 24) mit jeweiligen Anfangspunkten (26) und Endpunkten (28) mittels der elektronischen Recheneinrichtung (14); Bestimmen der Abstände (30) von Anfangs- und Endpunkten (26, 28) zwischen einem ersten Belichtungsvektor (18) und zumindest einem zweiten Belichtungsvektor (20) der Arbeitsdatei (16) mittels der elektronischen Recheneinrichtung (14); und Komprimieren der Arbeitsdatei (16) durch Speichern des zumindest zweiten Belichtungsvektors (20) in Abhängigkeit von dem Anfangspunkt (26) und dem Endpunkt (28) des ersten Belichtungsvektors (18) und dem Abstand (30) zwischen dem ersten Belichtungsvektor (18) und dem zumindest zweiten Belichtungsvektor (20). Ferner betrifft die Erfindung ein Computerprogrammprodukt, ein computerlesbares Speichermedium sowie eine elektronische Recheneinrichtung (14).

## Beschreibung

Die Erfindung betrifft ein Verfahren zum Komprimieren von zumindest einer Arbeitsdatei zur Erzeugung eines Produkts für eine additive Fertigungsvorrichtung mittels einer elektronischen Recheneinrichtung gemäß dem geltenden Patentanspruch 1. Ferner betrifft die Erfindung ein Computerprogrammprodukt, ein computerlesbares Speichermedium sowie eine elektronische Recheneinrichtung.

In additiven Laser-Pulverbett-Fertigungsverfahren wird der Belichtungsprozess zum schichtweisen Aufbau des Werkstücks durch Prozess-Beschreibungsdateien, welche auch als Jobfiles beziehungsweise Arbeitsdatei bezeichnet werden, gesteuert, die spezifisch für die Anlage eines Herstellers von einer Druckvorbereitungssoftware erstellt werden. In diesen Arbeitsdateien sind typischerweise lagenweise Beschreibungen von Laserparametern und Vektorkoordinaten enthalten. Typischerweise enthalten diese Arbeitsdateien tausende von Schichten, beispielsweise zweihundert pro Zentimeter Bauhöhe, mit zehntausenden von Vektoren, sodass sich Dateigrößen bis in den Gigabyte-Bereich mit entsprechend großen Aufwänden für Speichern, Handling und Übertragung ergeben.

Ein gängiges Verfahren zur in-situ Prozessüberwachung in Laser-Pulverbett-Verfahren ist das Schmelzbadmonitoring, welches auch als Meltpoolmonitoring (MPM) bezeichnet werden kann. Hierbei wird die optische Emission des Schmelzbads mit einer hohen Datenrate von 60-100 kHz aufgezeichnet und jeden Messwert typischerweise zusammen mit einem Zeitstempel und der aktuellen Belichtungsposition für die Nachfolgeanalyse gespeichert. Hierdurch wird gewährleistet, dass die Messwerte später den Belichtungs-Positionen zugeordnet werden können. Die dabei entstehende Dateigrößen übersteigen bei Datenraten von bis zu 2,5 mb pro Sekunde die Größe der Arbeitsdatei um ein vielfaches.

Im Stand der Technik ist bekannt, dass beispielsweise keine effizienten Verfahren zur Datenreduktion eingesetzt werden. Hier ist beispielsweise bekannt, dass Integer-Werte in einem speziellen Zahlenformat mit werteabhängiger Größe gespeichert werden, was jedoch die Dateigröße nicht wesentlich beeinflusst, da entsprechend die Vektorkoordinaten den Großteil der Datengröße ausmachen. Ferner ist auch bekannt, dass verschiedene Bestandteile des Mehrlaser-Jobfiles in einem entsprechenden zip-Container zusammengefasst werden. Typischerweise wird dabei allerdings das zip-Format "Store" - das heißt keine Kompression - genutzt. Ähnlich werden verschiedene Bestandteile auch in einem ILT-Format in einem gemeinsamen zip-Container zusammengefasst.

Die Container-Ansätze haben den Nachteil, dass ein lagenweiser Datenzugriff, zum Beispiel für die Visualisierung einer Belichtungslage, nicht einfach möglich ist, sondern immer die Extraktion und gegebenenfalls Dekompression eines gesamten Jobfiles oder Sensordatenfiles erfordert. Außerdem werden durch einfache zip-Kompressionen in den Daten enthaltene Muster nicht berücksichtigt, sodass die Kompressionsrate Raum für Verbesserungen bietet.

Für Meltpool-Daten ist keine verlustfreie Kompression der gespeicherten Messdaten bekannt. Lediglich ein Verfahren, bei dem die Messdaten regionenweise aggregiert werden, womit die Datenmenge gegenüber der der Speicherung aller einzelner Messwerte reduziert wird, ist bekannt. Allerdings geht durch diesen Ansatz die direkte Zuordnung von Messpunkten zu Belichtungsvektoren verloren.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchen eine verbesserte Art der Komprimierung einer Arbeitsdatei realisiert werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in Unteransprüchen angegeben.

Ein Aspekt der Erfindung betrifft ein Verfahren zum Komprimieren von zumindest einer Arbeitsdatei zur Erzeugung eines Produkts für eine additive Fertigungseinrichtung mittels einer elektronischen Recheneinrichtung. Es wird die Arbeitsdatei mit zumindest zwei vorgegebenen Belichtungsvektoren mit jeweiligen Anfangspunkten und Endpunkten mittels der elektronischen Recheneinrichtung bereitgestellt. Es erfolgt das Bestimmen von Abständen zwischen den jeweiligen Anfangspunkten und den Endpunkten eines ersten Belichtungsvektors und zumindest eines zweiten Belichtungsvektors der Arbeitsdatei mittels der elektronischen Recheneinrichtung. Die Arbeitsdatei wird durch Speichern des zumindest zweiten Belichtungsvektors in Abhängigkeit von dem Anfangspunkt und dem Endpunkt des ersten Belichtungsvektors und den Abständen zwischen dem ersten Belichtungsvektor und dem zumindest zweiten Belichtungsvektor komprimiert.

Insbesondere nutzt dabei die Erfindung, dass die Majorität der Belichtungsvektoren in einem sogenannten Zickzack-Muster angeordnet ist. Hierbei ist die Orientierung jedes zweiten Vektors gedreht, sodass kleine Abstände zwischen aufeinanderfolgenden Start- und Endpunkten entstehen. Es wird dann der Abstand beziehungsweise eine Deltakodierung durchgeführt, sodass jeder Vektorblock über die Koordinaten des ersten Vektors, also des ersten Belichtungsvektors, und nachfolgende Abstände vollständig beschrieben wird. Somit wird beispielsweise der zweite Belichtungsvektor lediglich durch den Abstand zum ersten Belichtungsvektor beschrieben.

Die Delta-Kodierung wird ermöglicht durch eine vorhergehende Einheitenkonversion unter Berücksichtigung der technisch relevanten Auflösung (z.B. Mikrometer)und Formatwandlung auf Ganzzahlwerte (z.B. 64-Bit Integer). Hierdurch werden in der Delta-Kodierung der Vektorkoordinaten kumulative Rundungsfehler vermieden.

Dies ermöglicht eine verbesserte Datenkompression, wodurch beispielsweise Netzbandbreite gespart werden kann. Ferner kann auch ein schnelleres Abarbeiten der Arbeitsdateien beziehungsweise eine schnellere Dekompression der komprimierten Arbeitsdatei realisiert werden.

Insbesondere im Gegensatz zu der Nutzung von beispielsweise zip-Containern erlaubt die lagenweise Kompression der Arbeitsdateien den späteren lesenden Zugriff auf einzelne Lagendaten ohne Notwendigkeit der Dekompression des gesamten Datensatzes. Die Umsortierung, Einheitskonversion und Rundung der Vektorkoordinatenwerte steigert die Komprimierbarkeit um ein Mehrfaches.

Es ist selbstverständlich, dass zum Komprimieren unterschiedliche Komprimierungsalgorithmen verwendet werden können. Die zip-Komprimierung ist als lediglich beispielhaft zu verstehen.

Gemäß einer vorteilhaften Ausgestaltungsform werden die zumindest zwei Belichtungsvektoren in Hatchblöcken (d.h. Gruppen von disjunkten Vektoren identischer Parameter) sortiert vorgegeben. Der Begriff Hatchblock bezeichnet eine Gruppe von nicht-aneinanderhängenden Vektoren mit identischen Laserparametern (Leistung, Geschwindigkeit, etc.). Um diese Parameter nicht für jeden Vektor sichern zu müssen, werden Vektoren in Gruppen disjunkter Vektoren ("Hatchblöcke") oder zusammenhängender Vektoren ("Polylinien") zusammengefasst.

Eine weitere vorteilhafte Ausgestaltungsform sieht vor, dass die zumindest zwei Belichtungsvektoren in Abhängigkeit von einer jeweiligen Schicht für das Produkt vorgegeben werden. Insbesondere kann somit eine schichtenweise Darstellung des Produkts über die Belichtungsvektoren hergestellt werden. Insbesondere bei den Schichten handelt es sich um Schichten, welche beispielsweise 200 Schichten pro Zentimeter im hergestellten Produkt betreffen. Diese Schichten werden wiederum insbesondere im Zickzack-Verfahren hergestellt, sodass zuverlässig eine Dekompression auf Basis dieses Zickzack-Verfahrens und somit auf Basis der Abstände zum ersten Belichtungsvektor realisiert werden kann.

Es hat sich weiterhin als vorteilhaft erwiesen, wenn beim Speichern des zumindest zweiten Belichtungsvektors eine Orientierung relativ zum ersten Belichtungsvektor gedreht wird. Mit anderen Worten ist der zweite Belichtungsvektor in die andere Richtung orientiert als der erste Belichtungsvektor. Ein dritter Belichtungsvektor kann dann beispielsweise wiederum in die Richtung des ersten Belichtungsvektors orientiert sein. Ein vierter Belichtungsvektor kann wiederum in die Richtung des zweiten Belichtungsvektors orientiert sein. Insbesondere kann somit auf eine Art und Weise eine Kompression der Daten stattfinden, da sowohl der zweite als auch der vierte Belichtungsvektor beispielsweise den gleichen Start- und Endpunkt, lediglich versetzt durch den Abstand hat.

Weiterhin vorteilhaft ist, wenn Vektorblöcke in der Arbeitsdatei mit einer Vielzahl von Belichtungsvektoren gruppiert werden, wobei die Vielzahl von Belichtungsvektoren mit einem Abstand zum ersten Belichtungsvektor innerhalb eines Vektorblocks gespeichert werden. Der Vektorblock kann dabei insbesondere im Wesentlichen einer Schicht des Produkts beziehungsweise einer Teilschicht des Produkts entsprechen. Die Gruppierung ermöglicht es, dass beispielsweise Vektoren, welche im Wesentlichen gleich orientiert sind gruppiert werden. Diese Gruppe kann dann wiederum auf Basis des ersten Belichtungsvektors und dem Abstand zum ersten Belichtungsvektor entsprechend beschrieben werden. Somit kann eine entsprechende Datenkompression eines Vektorblocks realisiert werden.

Es hat sich weiterhin als vorteilhaft erwiesen, wenn Koordinaten der Belichtungsvektoren transponiert werden und abgespeichert werden. Insbesondere werden für eine bessere Komprimierbarkeit die Koordinaten anschließend nicht, wie im Stand der Technik, vertex- oder vektorweise, sondern transponiert, das heißt insbesondere als vier Sequenzen Vektorstart-x, Vektorstart-y, Vektorende-x, Vektorende-y an den Kompressor übergeben. Dabei werden insbesondere alle Belichtungslagen als separate Blöcke komprimiert, beim Speichern eine sogenannte Suchtabelle ("Seektable") mit Verweis auf die Positionen dieser komprimierten Datenblöcke aufgebaut.

Ebenfalls vorteilhaft ist, wenn Belichtungslagen des Produkts in der Arbeitsdatei separiert voneinander abgespeichert werden. Insbesondere können somit die Daten lagenweise abgespeichert werden. Dies ermöglicht insbesondere ein einfaches späteres Zugreifen auf die entsprechenden Lagen. Beispielsweise können entsprechende Messdaten mit den Lagen versehen werden, und sollte beispielsweise ein Fehler im Produkt aufgegriffen werden, so können diese Lagen entsprechend auf einfache Art und Weise abgefragt werden.

Eine weitere vorteilhafte Ausgestaltungsform sieht vor, dass eine Dekompression der Arbeitsdatei in der umgekehrten Reihenfolge als die Kompression durchgeführt wird. Insbesondere kann für die Dekompression der Arbeitsdatei die beschriebenen Schritte in umgekehrter Reihenfolge ausgeführt werden. Insbesondere kann somit eine kumulative Summe anstatt einer Differenzierung realisiert werden. Diese hat insbesondere den Vorteil, dass sich bis auf die Rundung auf ganze Mikrometer wieder die Original-Belichtungsvektoren ergeben. Alle anderen Bestandteile der Arbeitsdatei, insbesondere beispielsweise Laserparameter, Bauteilinformationen oder dergleichen, werden ohne weitere Vorprozessierung direkt an den Dekompressionsalgorithmus übergeben.

Weiterhin vorteilhaft ist, wenn durch eine geeignete Vorprozessierung die Datenpunkte eines in-situ Messverfahrens den zugehörigen Belichtungsvektoren zugeordnet werden und die Samplingfrequenz des in-situ Messverfahrens der additiven Fertigungsvorrichtung bei der Kompression von in-situ Messdaten berücksichtigt wird. Insbesondere können somit beispielsweise entlang eines Belichtungsvektors die Koordinaten der einzelnen Messpunkte unberücksichtigt bleiben. Beispielsweise kann dann in Abhängigkeit der Samplingfrequenz zwischen einem Anfangspunkt und einem Endpunkt des Belichtungsvektors automatisiert in Abhängigkeit der Samplingfrequenz die entsprechenden Punkte abgefragt werden, ohne eine tatsächliche Speicherung von Koordinaten beispielsweise durchführen zu müssen. Dies ermöglicht eine weitere Komprimierung der entsprechenden Arbeitsdatei.

Weiterhin vorteilhaft ist, wenn Samplingpunkte zwischen dem Anfangspunkt und dem Endpunkt durch die Samplingfrequenz vorgegeben werden und eine Datenkompression auf Basis der Samplingfrequenz durchgeführt wird. Wie bereits erwähnt, kann vorgesehen sein, dass lediglich ein Anfangspunkt und ein Endpunkt eines Belichtungsvektors vorgegeben wird. Die Laserpunkte beziehungsweise Samplingpunkte zwischen dem Anfangs- und Endpunkt können dabei auf Basis der Samplingfrequenz automatisiert bestimmt werden und entsprechend komprimiert abgespeichert werden.

Ferner hat es sich als vorteilhaft erwiesen, wenn während einer Herstellung des Produkts eine Überwachung der Herstellung mittels einer Überwachungseinrichtung der additiven Fertigungsvorrichtung durchgeführt wird und Messwerte der Überwachungseinrichtung mit dem jeweiligen Belichtungsvektor komprimiert und abgespeichert werden. Insbesondere kann somit auch eine komprimierte Speicherung der MPM-Daten realisiert werden, wobei hier die Messpunkte über ihre Position und gegebenenfalls über die Zeitabstände eindeutig einem Belichtungsvektor zugeordnet werden können. Aufgrund der konstanten Erfassungsrate sind die zu einem Vektor gehörigen Messwerte damit zwischen einem ersten und einem letzten Wert entlang des Vektors angeordnet. Unter Vernachlässigung eines Positionsfehlers von typischerweise beispielsweise 10 Mikrometern aufgrund der fehlenden Synchronisation zwischen MPM-Datenerfassung der Vektorbelichtung, können der erste und letzte Messwert eines Vektors den Vektorstart- beziehungsweise dem Endpunkt zugeordnet werden. Anstatt alle Messwerte nun mit Zeitstempel und Position zu speichern, ist es ausreichend die Messwerte den zugehörigen Vektoren zuzuordnen, insbesondere ein sogenanntes Vektormapping durchzuführen, und nur den Index des ersten und ggf. letzten Messpunkts für jeden Vektor zu sichern.

Es hat sich weiterhin als vorteilhaft erwiesen, wenn Messpunkte der Überwachungseinrichtung mit einem Betrieb der additiven Fertigungsvorrichtung korreliert werden und nur Messwerte abgespeichert werden, welche einen Betrieb der additiven Fertigungsvorrichtung kennzeichnen. Somit kann das mapping der MPM-Datenpunkte auf die Belichtungsvektoren derart durchgeführt werden, dass alle irrelevanten Messdaten, zum Beispiel von Intervallen mit abgeschalteten Laser, verworfen werden, sodass eine Sequenz von ausschließlich zu einer Vektorbelichtung zugehörigen Messpunkten entsteht. Zusätzlich zu dieser ist dann nur noch eine Indextabelle mit beispielsweise Startindex oder Messpunktanzahl eines jeden Belichtungsvektors zu speichern.

Der zu speichernde Datensatz von dem Messpunkt reduziert sich damit von beispielsweise Zeitstempel, x-Position, y-Position sowie Messwert auf den Messwert und einen Indexwert pro Belichtungsvektor.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung ein computerlesbares Speichermedium mit dem Computerprogrammprodukt nach dem vorhergehenden Aspekt.

Ein nochmals weiterer Aspekt der Erfindung betrifft eine elektronische Recheneinrichtung zum Komprimieren von zumindest einer Arbeitsdatei zur Erzeugung eines Produkts für eine additive Fertigungsvorrichtung, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Weiterhin betrifft die Erfindung auch eine Fertigungsvorrichtung, insbesondere eine additive Fertigungsvorrichtung, mit zumindest einer elektronischen Recheneinrichtung nach dem vorhergehenden Aspekt.

Insbesondere kann vorgesehen sein, dass auf Basis des Verfahrens die entsprechenden Arbeitsdateien derart benutzt werden, dass tatsächlich ein Produkt hergestellt wird und überwacht wird. Im Anschluss daran können die entsprechenden Arbeitsdateien dazu genutzt werden eine Überwachung des Produkts und somit eine Fehlerursachensuche durchzuführen.

Vorteilhafte Ausgestaltungsformen des Verfahrens sind als vorteilhafte Ausgestaltungsformen des Computerprogrammprodukts, des computerlesbaren Speichermediums sowie der elektronischen Recheneinrichtung anzusehen. Die elektronische Recheneinrichtung sowie die additive Fertigungsvorrichtung weisen hierzu insbesondere gegenständliche Merkmale auf, um die Verfahrensschritte durchführen zu können.

Unter einer Recheneinheit kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
- FIG 1: ein schematisches Blockschaltbild gemäß einer Ausführungsform einer additiven Fertigungsvorrichtung mit einer Ausführungsform einer elektronischen Recheneinrichtung;
- FIG 2: eine schematische Ansicht eines Herstellungsverfahrens zum Herstellen eines Produkts; und
- FIG 3: eine weitere schematische Ansicht eines Herstellungsverfahrens zum Herstellen eines Produkts.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

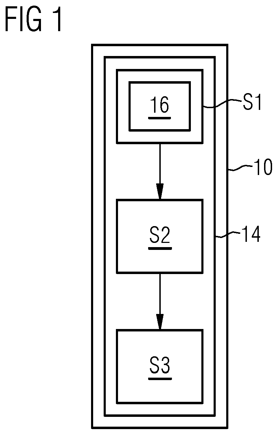

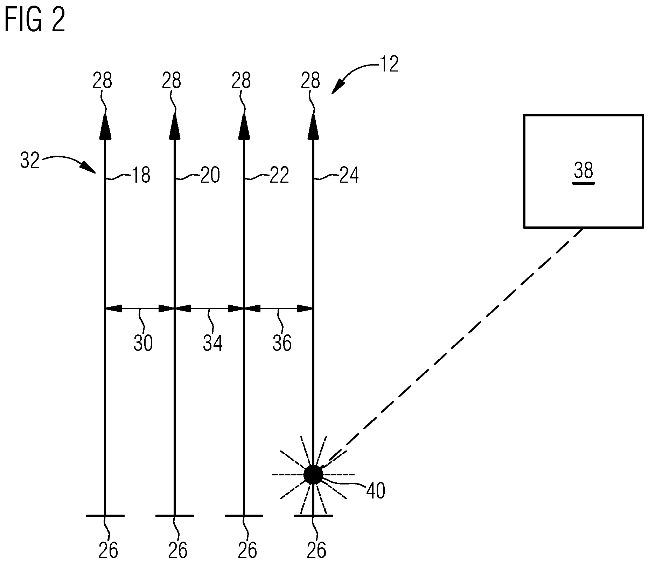

FIG 1 zeigt ein schematisches Blockschaltbild gemäß einer Ausführungsform einer additiven Fertigungsvorrichtung 10. Die additive Fertigungsvorrichtung 10 ist zum Herstellen eines Produkts 12 (FIG 2) ausgebildet. Die additive Fertigungsvorrichtung 10 weist insbesondere eine elektronische Recheneinrichtung 14 auf.

Die FIG 1 zeigt insbesondere ein Verfahren zum Komprimieren von zumindest einer Arbeitsdatei 16 zur Erzeugung des Produkts 12 für die additive Fertigungsvorrichtung 10. Es erfolgt dabei in einem ersten Schritt S1 das Bereitstellen der Arbeitsdatei 16 mit zumindest zwei vorgegebenen Belichtungsvektoren 18, 20, 22, 24 (FIG 2) mit jeweiligen Anfangspunkten 26 (FIG 2) und Endpunkten 28 (FIG 2) mittels der elektronischen Recheneinrichtung 14.

Es erfolgt dann die Umkehrung der Orientierung eines jeden zweiten Vektors und anschließend die Bestimmung eines Abstands 30 (FIG 2) zwischen den nun dicht beieinanderliegenden Anfangspunkten 26 und Endpunkten 30 der Arbeitsdatei 16 mittels der elektronischen Recheneinrichtung 14 in einem zweiten Schritt S2.

In einem dritten Schritt S3 erfolgt das Komprimieren der Arbeitsdatei 16 durch Speichern des zumindest zweiten Belichtungsvektors 20 in Abhängigkeit von dem Anfangspunkt 26 und dem Endpunkt 28 des ersten Belichtungsvektors 18 und dem Abstand 30 zwischen dem ersten Belichtungsvektors 18 und dem zumindest zweiten Belichtungsvektors 20.

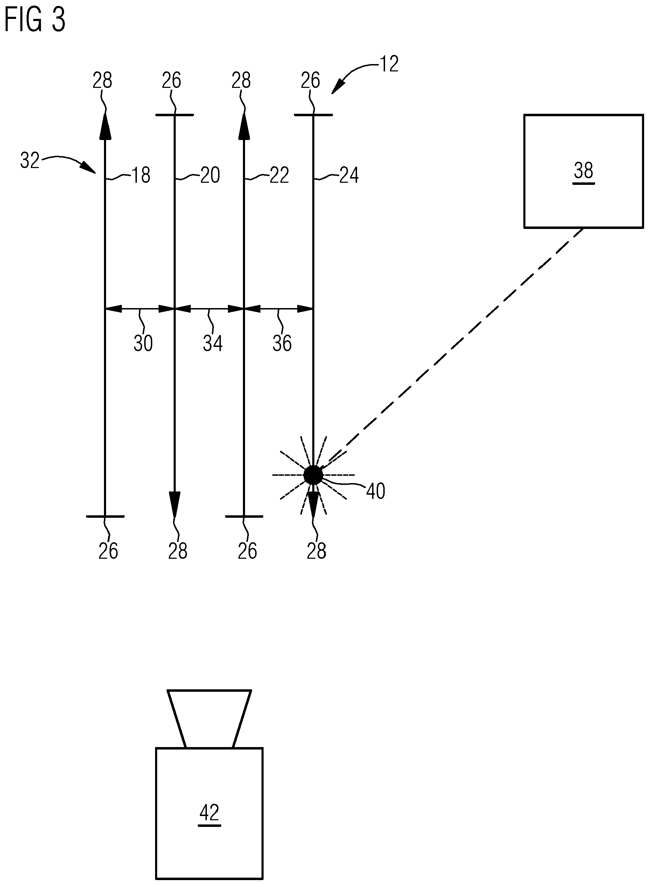

FIG 2 und FIG 3 zeigen jeweils eine schematische Ansicht einer Ausführungsform zum Verfahren eines Herstellens eines Produkts 12, wobei das Produkt 12 vorliegend und insbesondere durch lediglich einen einzigen Vektorblock 32 dargestellt ist. Beim Vektorblock 32 werden insbesondere die Belichtungsvektoren 18, 20, 22, 24 in der FIG 2 nacheinander und in der FIG 3 im Zickzack-Verfahren hergestellt. Insbesondere handelt es sich bei dem Vektorblock 32 um lediglich eine Schicht des Produkts 12.

Im folgenden Ausführungsbeispiel ist insbesondere gezeigt, dass zwischen dem ersten Belichtungsvektor 18 und dem zweiten Belichtungsvektor 20 ein erster Abstand 30 ausgebildet ist. Zwischen dem zweiten Belichtungsvektor 20 und dem dritten Belichtungsvektor 22 ist ein zweiter Abstand 34 ausgebildet. Ferner ist zwischen dem dritten Belichtungsvektor 22 und einem vierten Belichtungsvektor 24 ein dritter Abstand 36 ausgebildet.

Es ist nun vorgesehen, dass der zweite Belichtungsvektor 20 mit Hilfe des ersten Belichtungsvektors 18 und dem ersten Abstand 30 abgespeichert wird. Der dritte Belichtungsvektor kann wiederum auf Basis des zweiten Belichtungsvektors 20 und auf Basis des zweiten Abstands 34 entsprechend abgespeichert werden. Ferner kann der vierte Belichtungsvektor 24 auf Basis des dritten Belichtungsvektors 18 und dem dritten Abstand 36 beschrieben werden.

Die FIG 2 zeigt ferner, dass die Belichtungsvektoren 18, 20, 22, 24 insbesondere mittels einer Lasereinrichtung 38 erzeugt werden. Insbesondere können hierbei bei Verwendung einer Messeinrichtung (z.B. MPM) Messwerte 40 entlang der jeweiligen Belichtungsvektoren 18, 20, 22, 24 erzeugt werden.

Dabei ist insbesondere vorgesehen, dass die zumindest zwei Belichtungsvektoren 18, 20, 22, 24 insbesondere in Hatchblöcken sortiert vorgegeben werden. Ferner können zumindest die zwei Belichtungsvektoren 18, 20, 22, 24 in Abhängigkeit von einer jeweiligen Schicht für das Produkt 12 vorgegeben werden.

Des Weiteren zeigt die FIG 2 das beim Speichern des zumindest zweiten Belichtungsvektors 20 eine Orientierung relativ zum ersten Belichtungsvektor 18 gedreht wird.

Des Weiteren zeigt die FIG 2 das Vektorblöcke 32 in der Arbeitsdatei 16 mit einer Vielzahl von Belichtungsvektoren 18, 20, 22, 24 gruppiert werden, wobei die Vielzahl von Belichtungsvektoren 18, 20, 22, 24 mit einem jeweiligen Abstand 30, 34, 36 zum ersten Belichtungsvektor 18 innerhalb eines Vektorblocks 32 gespeichert werden.

Ferner kann vorgesehen sein, dass Koordinaten der Belichtungsvektoren 18, 20, 22, 24 transponiert werden und abgespeichert werden. Ferner können die Belichtungslagen des Produkts 12 in der Arbeitsdatei 16 separiert voneinander abgespeichert werden. Des Weiteren kann eine Dekompression der Arbeitsdatei 16 in einer umgekehrten Reihenfolge als die Kompression durchgeführt werden.

Ferner kann vorgesehen sein, dass eine Samplingfrequenz der Messeinrichtung 38 der additiven Fertigungsvorrichtung 10 bei der Kompression berücksichtigt wird. Hierbei können die Samplingpunkte 40 zwischen dem Anfangspunkt 26 und dem Endpunkt 28 durch die Samplingfrequenz vorgegeben werden und eine Datenkompression auf Basis der Samplingfrequenz durchgeführt werden.

Des Weiteren kann vorgesehen sein, dass während eines Herstellens eines Produkts 12 eine Überwachung der Herstellung mittels einer Überwachungseinrichtung 42, vorliegend beispielsweise mittels eines MPM-Sensors, der Fertigungsvorrichtung 10 durchgeführt wird und Messwerte der Überwachungseinrichtung 42 mit dem jeweiligen Belichtungsvektor 18, 20, 22, 24 komprimiert und abgespeichert werden. Hierbei kann ferner vorgesehen sein, dass Messpunkte der Überwachungseinrichtung 42 mit einem Betrieb der additiven Fertigungsvorrichtung 10, insbesondere der Lasereinrichtung 38, korreliert werden und nur Messpunkte abgespeichert werden, welche einen Betrieb der additiven Fertigungsvorrichtung 10 kennzeichnen.

Insbesondere beschreiben somit die FIG 1 und 2 das für die Kompression der Arbeitsdatei 16 die Kombination eines Kompressionsverfahrens mittels vorhergehender Umsortierung und Einheitenkonversion zum Einsatz kommt. Dabei werden die Daten der Arbeitsdatei 16 lagenweise komprimiert, sodass unter Nutzung einer in der Arbeitsdatei 16 enthaltenen Verweistabelle, welche auch als Seektable bezeichnet wird, weiterhin lagenweise lesend auf die Daten zurückgegriffen werden kann.

In einer Einheitenkonversion werden beispielsweise Float32-Werte der Vektorkoordinaten auf ganze Mikrometer gerundet, da angesichts der typischen Prozess-Genauigkeit, insbesondere bedingt unter anderem durch die Schmelzbadgrößen von >100 Mikrometern, Nachkommastellen die in einer Mikrometer-Darstellung vernachlässigt werden können.

In einem zweiten Schritt wird ausgenutzt, dass typischerweise die Majorität der Belichtungsvektoren 18, 20, 22, 24 in sogenannten Hatchblöcken gruppiert und in einem Zickzack-Muster angeordnet sind. Die Orientierung jedes zweiten Belichtungsvektors 18, 20, 22, 24 wird gedreht, sodass kleine Abstände 30, 34, 36 zwischen aufeinanderfolgenden Start- und Endpunkten entstehen. Nachfolgend werden die Positionen delta-kodiert, insbesondere differenziert, sodass jeder Vektorblock 32 über die Koordinaten des ersten Belichtungsvektors 18 und nachfolgende Abstände 30, 34, 36 vollständig beschrieben wird. Für eine bessere Komprimierbarkeit werden die Koordinaten anschließend nicht vertex- oder vektorweise, sondern transponiert - das heißt als Vier Sequenzen Vektorstarts-x, Vektorstarts-y, Vektorenden-x, Vektorenden-y - an den Kompressor übergeben. Dabei werden alle Belichtungslagen als separate Blöcke komprimiert, und beim Speichern die Verweistabelle mit Verweis auf die Position dieser komprimierten Datenblöcke aufgebaut.

Für die Dekompression der Arbeitsdatei 16 werden die beschriebenen Schritte in umgekehrter Reihenfolge beziehungsweise Auswirkungen ausgeführt, sodass sich bis auf die Rundung auf ganze Mikrometer die Koordinaten der Belichtungsvektoren 18, 20, 22, 24 entstehen. Alle anderen Bestandsteile der Arbeitsdatei 16, insbesondere Laserparameter, Bauteilinformationen oder dergleichen, werden ohne weitere Vorprozessierung direkt an den Kompressionsalgorithmus übergeben.

Für die komprimierte Speicherung von den Messdaten (MPM-Daten) wird ausgenutzt, dass die Messpunkte über ihre Position und gegebenenfalls auch über die Zeitabstände eindeutig den Belichtungsvektoren 18, 20, 22, 24 zugeordnet werden können. Aufgrund der konstanten Erfassungsrate sind die zum einen Belichtungsvektor 18, 20, 22, 24 gehörigen Messwerte damit zwischen einem ersten und einem letzten Wert äquidistant entlang des Belichtungsvektors 18, 20, 22, 24 angeordnet. Unter Vernachlässigung eines Positionsfehlers von typischerweise maximal zehn Mikrometer aufgrund der fehlenden Synchronisation zwischen der Datenerfassung und der Vektorbelichtung, können der erste und der letzte Messwert eines Belichtungsvektors 18, 20, 22, 24 dem Vektoranfangs- beziehungsweise Endpunkt 26, 28 zugeordnet werden. Anstatt alle Messwerte mit Zeitstempel und Position zu speichern, ist es ausreichend die Messwerte den zugehörigen Belichtungsvektoren 18, 20, 22, 24 zuzuordnen, insbesondere auch Vektor-Mapping genannt, und nur den Index des ersten und letzten Messpunkts für jeden Belichtungsvektor 18, 20, 22, 24 zu sichern.

Das Mapping der Messpunkte auf die Belichtungsvektoren 18, 20, 22, 24 erlaubt es darüber hinaus, alle irrelevanten Messdaten, zum Beispiel von Intervallen mit abgeschalteter Lasereinrichtung 38, zu verwerfen, sodass eine Sequenz von ausschließlich Vektorzugehörigen Messpunkten entsteht. Zusätzlich zu dieser ist dann nur noch eine Indextabelle mit zum Beispiel Startindex oder Messpunktanzahl eines jeden Belichtungsvektors 18, 20, 22, 24 zu speichern.

Der zu speichernde Datensatz für einen Messpunkt reduziert sich damit von insbesondere Zeitstempel, x-Position, y-Position und Messwert auf den Messwert und einen Indexwert pro Belichtungsvektor 18, 20, 22, 24. Über die nachfolgende Kompression kann dadurch beispielsweise die Dateigröße um typischerweise Faktor 10 bis 15 reduziert werden.

Die Messdaten weisen insbesondere einen signifikanten Rauschanteil auf, dadurch kann außerdem eine Rauschunterdrückung zum Beispiel Maskierung der niedrigwertigen Bits, und dadurch die Komprimierbarkeit verbessert werden, wobei es sich hierbei um einen verlustbehafteten Schritt handelt. Für eine typische Signaldynamik von 10 bis 12 Bits kann durch Maskierung der niedrigwertigen 2 Bits, das heißt die Reduktion der Signaldynamik um den Faktor 4, und anschließend eine Delta-Kodierung die Größe des Datensatzes um nochmals weitere 30% reduziert werden, ohne dass sich für die Analyse relevante Änderungen ergeben.

### Bezugszeichenliste

- 10: additive Fertigungsvorrichtung
- 12: Produkt
- 14: elektronische Recheneinrichtung
- 16: Arbeitsdatei
- 18: erster Belichtungsvektor
- 20: zweiter Belichtungsvektor
- 22: dritter Belichtungsvektor
- 24: vierter Belichtungsvektor
- 26: Anfangspunkt
- 28: Endpunkt
- 30: erster Abstand
- 32: Vektorblock
- 34: zweiter Abstand
- 36: dritter Abstand
- 38: Lasereinrichtung
- 40: Messwerte
- 42: Überwachungseinrichtung
- S1 -S3: Schritte des Verfahrens

## Patentansprüche

1. Verfahren zum Komprimieren von zumindest einer Arbeitsdatei (16) zur Erzeugung eines Produkts (12) für eine additive Fertigungsvorrichtung (10) mittels einer elektronischen Recheneinrichtung (14), mit den Schritten:
- Bereitstellen der Arbeitsdatei (16) mit zumindest zwei vorgegebenen Belichtungsvektoren (18, 20, 22, 24) mit jeweiligen Anfangspunkten (26) und Endpunkten (28) mittels der elektronischen Recheneinrichtung (14);
- Bestimmen der Abstände (30) zwischen den Anfangspunkten (26) und den Endpunkten (28) eines ersten Belichtungsvektors (18) und zumindest eines zweiten Belichtungsvektors (20) der Arbeitsdatei (16) mittels der elektronischen Recheneinrichtung (14); und
- Komprimieren der Arbeitsdatei (16) durch Speichern des zumindest zweiten Belichtungsvektors (20) in Abhängigkeit von dem Anfangspunkt (26) und dem Endpunkt (28) des ersten Belichtungsvektors (18) und der Abstände (30) zwischen dem ersten Belichtungsvektor (18) und dem zumindest zweiten Belichtungsvektor (20).

2. Verfahren nach Anspruch 1, **dadurch gekennzeichnet, dass** die zumindest zwei Belichtungsvektoren (18, 20, 22, 24) in Hatchblöcken sortiert vorgegeben werden.

3. Verfahren nach Anspruch 1 oder 2, **dadurch gekennzeichnet, dass** die zumindest zwei Belichtungsvektoren (18, 20, 22, 24) in Abhängigkeit von einer jeweiligen Schicht für das Produkt (12) vorgegeben werden.

4. Verfahren nach einem der vorhergehenden Ansprüche, **dadurch gekennzeichnet, dass** beim Speichern des zumindest zweiten Belichtungsvektors (20) eine Orientierung relativ zum ersten Belichtungsvektor (18) gedreht wird.

5. Verfahren nach einem der vorhergehenden Ansprüche, **dadurch gekennzeichnet, dass** Vektorblöcke (32) in der Arbeitsdatei (16) mit einer Vielzahl von Belichtungsvektoren (18, 20, 22, 24) gruppiert werden, wobei die Vielzahl von Belichtungsvektoren (18, 20, 22, 24) mit einem Abstand (30, 34, 36) zum Vorgänger-Belichtungsvektor (18, 20, 22) innerhalb eines Vektorblocks (32) gespeichert werden.

6. Verfahren nach einem der vorhergehenden Ansprüche, **dadurch gekennzeichnet, dass** Koordinaten der Belichtungsvektoren (18, 20, 22, 24) transponiert werden und abgespeichert werden.

7. Verfahren nach einem der vorhergehenden Ansprüche, **dadurch gekennzeichnet, dass** Belichtungslagen des Produkts (12) in der Arbeitsdatei (16) separiert voneinander abgespeichert werden.

8. Verfahren nach einem der vorhergehenden Ansprüche, **dadurch gekennzeichnet, dass** eine Dekompression der Arbeitsdatei (16) in einer umgekehrten Reihenfolge als die Kompression durchgeführt wird.

9. Verfahren nach einem der vorhergehenden Ansprüche, **dadurch gekennzeichnet, dass** eine Samplingfrequenz eines in-situ Messverfahrens der additiven Fertigungsvorrichtung (10) bei der Kompression von in-situ Messdaten berücksichtigt wird.

10. Verfahren nach Anspruch 9, **dadurch gekennzeichnet, dass** Samplingpunkte zwischen dem Anfangspunkt (26) und dem Endpunkt (28) durch die Samplingfrequenz vorgegeben werden und eine Datenkompression auf Basis der Samplingfrequenz durchgeführt wird.

11. Verfahren nach einem der vorhergehenden Ansprüche, **dadurch gekennzeichnet, dass** während einer Herstellung des Produkts (12) eine Überwachung der Herstellung mittels einer Überwachungseinrichtung (42) der additiven Fertigungsvorrichtung (10) durchgeführt wird und Messwerte der Überwachungseinrichtung (42) mit Bezug auf den jeweiligen Belichtungsvektor (18, 20, 22, 24) komprimiert und abgespeichert werden.

12. Verfahren nach Anspruch 11, **dadurch gekennzeichnet, dass** Messpunkte der Überwachungseinrichtung (42) mit einem Betrieb der additiven Fertigungsvorrichtung (10) korreliert werden und nur Messpunkte abgespeichert werden, welche einen Betrieb der additiven Fertigungsvorrichtung (10) kennzeichnen.

13. Computerprogrammprodukt mit Programmcodemitteln, welche eine elektronische Recheneinrichtung (14) dazu veranlassen, wenn die Programmcodemittel von der elektronischen Recheneinrichtung (14) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (14) zum Komprimieren von zumindest einer Arbeitsdatei (16) zur Erzeugung eines Produkts (12) für eine additive Fertigungsvorrichtung (10), wobei die elektronische Recheneinrichtung (14) zum Durchführen eines Verfahrens nach einem der Ansprüche 1 bis 12 ausgebildet ist.
